# EUROPEAN PATENT SPECIFICATION

(11) **EP 1 483 914 B1**
(45) Date of publication and mention of the grant of the patent: **03.05.2017**
(21) Application number: 03711434.5
(22) Date of filing: 05.03.2003
(51) Int. Cl.: H04N 7/088, H04N 7/173, H04N 21/235, H04N 21/43, H04N 21/462, H04N 21/4722, H04N 21/4782, H04N 21/61, H04N 21/63, H04N 21/6405, H04N 21/8545, H04N 21/858

(54) **MULTICASTING OF INTERACTIVE DATA**
MEHRFACHSENDUNG VON INTERAKTIVEN DATEN
MULTIDIFFUSION DE DONNEES INTERACTIVES

(30) Priority: 05.03.2002 US 361949 P
(43) Date of publication of application: 08.12.2004
(73) Proprietor: OpenTV, Inc., San Francisco, CA 94111 (US)
(72) Inventor: ZENONI, Ian, Highlands Ranch, CO 80126 (US)
(74) Representative: Wenger, Joel-Théophile
(86) International application number: PCT/US2003/006848
(87) International publication number: WO 2003/077559

(56) References cited:
- EP-A- 0 982 943
- WO-A-99/15968
- US-B1- 6 330 719

## Description

### Cross Reference to Related Applications

The present application is based upon and claims the benefit of United States Provisional Patent Application Serial Number 60/361,949 by lan Zenoni entitled "Multicasting of Interactive Data Over a Back Channel" filed March 5, 2002, the entire contents of which is hereby specifically incorporated by reference for all it discloses and teaches.

### Background

### a. Field

The present invention pertains generally to interactive TV and more particularly to delivery of interactive data. The present disclosure describes multicasting of interactive data over a back channel.

### b. Description of the Background

There have been at least two methods of delivering interactive data to users' set-top boxes. ATVEF Transport B has been used to broadcast the interactive data as part of the actual video signal that is sent to the set-top box. Since Transport B requires that the interactive data be encoded and sent as a part of the video signal, valuable bandwidth of the cable system is consumed in transmitting the interactive data to the set-top boxes. References made herein to the ATVEF specification are made for illustrative purposes only, and such references should not be construed as an endorsement, in any manner, of the ATVEF specification.

Alternatively, ATVEF Transport A has been used in which interactive triggers are provided to the set-top boxes of the users. The Transport A trigger provides an address that the set-top box can access to obtain the interactive data. A separate connection is then established between the server providing the interactive data and each of the set-top boxes so that the interactive data can be downloaded to each of the set-top boxes. However, if numerous users log onto the server to request a separate download of the interactive data, the server may crash or provide the data at a much slower rate. For example, if several thousand set-top boxes log onto the server at once to obtain the interactive data, the server may crash or be unable to provide the data at a sufficient rate to satisfy all users.

A system comparable to the one described is disclosed in US-B-6,330,719. While it does not necessarily demand the utilization of the ATVEF Transport A specification, its technology is very similar. However, to reduce the server load the requests of the set-top boxes are randomly distributed over a given period of time. As not all set-top boxes try to log onto the server at the very same time traffic peaks are avoided.

ATVEF Transport A uses a "separate channel" to access interactive data. For example, a separate channel may include the back channel of a cable system, which comprises a specific set of designated frequencies on the cable. Alternatively, a separate channel may comprise an asymmetric connection such as a separate telephone line using a dial-up modem, a DSL connection, etc.

Hence, a system is needed that does not consume excessive bandwidth of the downstream feed and does not tax the abilities of server supplying interactive data.

### Summary

The present invention overcomes the disadvantages and limitations of the prior art by providing a system that allows for multicasting of interactive data from a multicast server to a plurality of set-top boxes that access the multicast server over a separate channel. The system of the present invention retrieves an ATVEF Transport A type of trigger for interactive data from a source encoded video signal at the cable headed, decodes the trigger, and provides the decoded trigger to a multicast server. The multicast server accesses the Internet site and downloads the interactive data. The multicast server then broadcasts the multicast interactive data on a repetitive basis at a multicast address. The multicast address is sent to a trigger server, which generates a multicast trigger. The video signal that has been stripped from the Transport A trigger is encoded with the multicast trigger. The video signal that is encoded with the multicast trigger is sent to the set-top box. The set-top box receives the multicast trigger along with the video and accesses the multicast server to obtain the multicast data over a separate channel.

The present invention may therefore comprise a method of multicasting interactive data to set-top boxes and retrieving interactive data over a separate channel comprising : obtaining a video signal encoded with a trigger signal, the trigger signal containing an Internet address that can be accessed by said set-top boxes to obtain interactive data; decoding the trigger signal to obtain the Internet address; accessing the Internet address to obtain the interactive data; multicasting the interactive data from a
multicast server at a multicast server address; encoding the video signal with the multicast server address; accessing the interactive data by the set-top box at the multicast server address through the back channel.

The present invention may further comprise a system for multicasting interactive data from a headend for access over a separate channel comprising: a decoder that receives an encoded video signal from a source that is encoded with a trigger and that decodes the trigger signal to obtain an Internet address indicating where the interactive data can be accessed; a multicast server that accesses and downloads the interactive data at the Internet address and multicasts the interactive data from a multicast server address; an encoder that encodes a video signal with the multicast address; at least one set-top box that decodes the video signal to obtain the multicast address, and that accesses and downloads the interactive data over a separate channel from the multicast server at the multicast address.

### Brief Description of the Drawings

FIGURE 1 discloses a block diagram of one implementation of the present invention.
FIGURE 2 is a flow diagram illustrating the operation of the headend device for the implementation illustrated in Fig. 1.
FIGURE 3 is a flow diagram of the operation of the set-top box illustrated in Fig. 1.

### Detailed Description

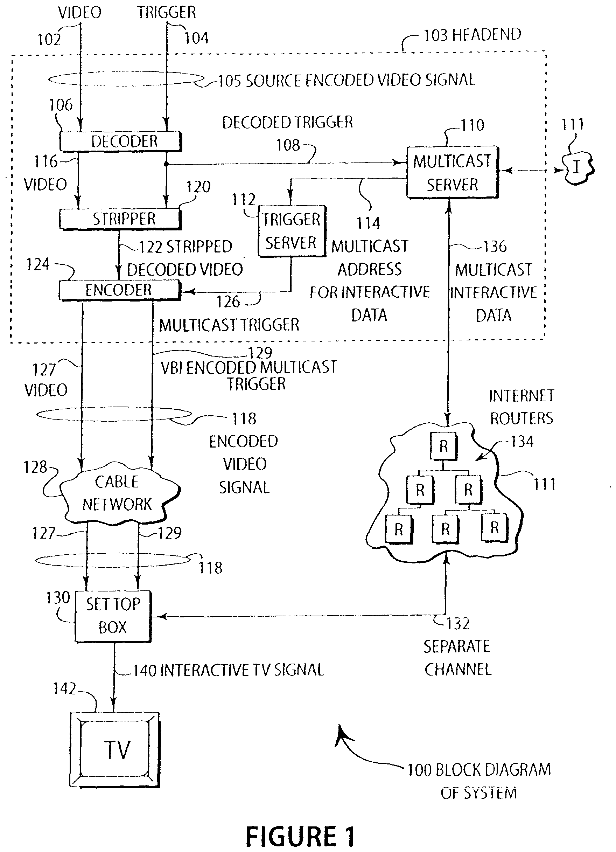

Fig. 1 is a block diagram of an implementation of the system of the present invention. As shown in Fig. 1, a source encoded video signal 105 is received at headend device 103, that includes a video signal 102 together with a trigger signal 104, that corresponds to a Transport A type of trigger signal. For example, a typical Transport A signal may comprise the address at which interactive data can be retrieved, such as over the Internet. An example of a trigger signal that is compatible with an ATVEF trigger is: "http://www.itv.com/index.html[EF30]". References made herein to the ATVEF specification are made for illustrative purposes only, and such references should not be construed as an endorsement, in any manner, of the ATVEF specification. The term "headend" can constitute any location or system upstream from the set-top box. The video signal 102 and the trigger signal 104 are received by a decoder 106 in the headend 103. The decoder 106 decodes the trigger signal to generate a decoded trigger signal 108 that is transmitted to a multicast server 110. Trigger server 112 obtains a multicast address 114 from the multicast server 110 that corresponds to the location of multicasted data 136 that is provided by the multicast server 110. Trigger server 112 can comprise any type of server or may be part of the multicast server. Also, the multicast server 110 and trigger server can be located at any desired location and not necessarily at the headend. The multicast server 110 uses the decoded trigger signal 108 to access the interactive data over the Internet 111. The multicast server 110 retrieves the multicast data from the Internet 111 and provides a multicasted interactive data signal 136.

As also shown in Fig. 1, trigger server 112 obtains the multicast address 114 and generates a multicast trigger 126. The multicast trigger 126 is transmitted to an encoder 124. Encoder 124 encodes the video signal 122 provided by stripper 120. Stripper 120 receives the video signal 116 and trigger 108 and strips the video signal 116 to provide the pure video signal 122. Encoder 124 encodes the video signal 122 with the multicast trigger 129 to produce an encoded video signal 118 that is encoded with the multicast trigger 129. For example, the multicast trigger 129 may be encoded in the vertical blanking interval of the video signal 127 to produce the encoded video signal 118. The multicast trigger may appear, but is not limited to the following: "<multicast:224.192.168.10/index.html>[1270]".

As also shown in Fig. 1, the encoded video signal 118 is transmitted over cable 128 to the users' set-top boxes, such as set-top box 130. If the set-top box 130 is tuned to the particular frequency channel for the encoded video signal 118, the set-top box 130 receives the encoded video signal 118 and determines that a multicast trigger is encoded in the video signal. The set-top box 130 then utilizes the separate channel 132, such as a back channel, to request the multicasted data 136. The request on the separate channel 132 proceeds through a series of routers 134 on the Internet 111 that open a transmission path for the multicasted data 136 over the separate channel 132 to the set-top box 130 (see RFC 1112 "Host Extensions for IP Multicasting",
http://www.faqs.org/rfes/rfc1112.html). The set-top box 130 then uses the multicasted data 136 to generate an interactive TV signal 140 that is transmitted to TV 142. For example, the multicasted data 136 may take the form:
"multicast:://252.0.0.1/index.html." The address: "252.0.0.1" provides the address of the multicasted data while the start page is provided by: "index.html."

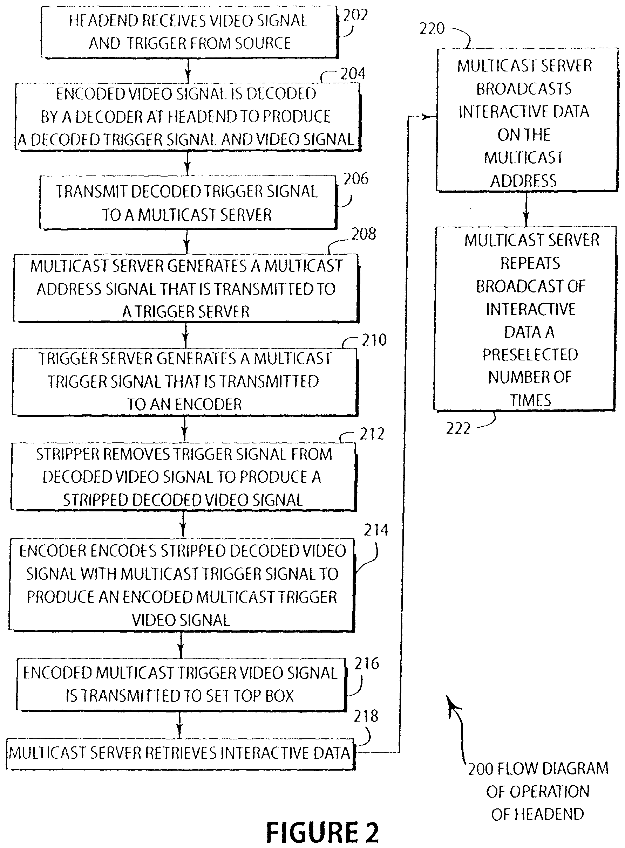

Fig. 2 is a flow diagram illustrating the operation of headend device 103 for the implementation illustrated in Fig. 1. As shown in Fig. 2, the headend device 103 receives the video 102 and the Transport A encoded interactive data (trigger 104) at step 202 as a source encoded video signal 105. At step 204, the decoder 106 decodes the source encoded video signal 105 and generates a video signal 116 and a decoded trigger signal 108. At step 206, a decoded trigger signal 108 is transmitted to the multicast server 110. The decoded trigger signal 108 is a standard Transport A type of trigger signal that indicates the address of where the interactive data can be retrieved. At step 208, a multicast address is generated by the multicast server 110 and is transmitted to trigger server 112. The trigger server 112 creates a multicast trigger 126 having a multicast address that is the address of the interactive data that is stored on the multicast server 110, at step 210.

In a separate series of steps that may occur either before, during or after the steps listed above, the trigger signal 108 is removed from the video signal to produce a stripped, decoded video signal 122 at step 212. At step 214, the stripped, decoded video signal 122 is then encoded with the multicast trigger 126 to produce an encoded multicast trigger video signal 118. At step 216, the encoded multicast trigger video signal 118 is transmitted to the set-top box 130 via the cable network 128 or by other means such as satellite transmissions or RF transmissions. At step 218, the multicast server 110 retrieves the multicast interactive data 136 from the Internet address provided by the decoded trigger 108. At step 220, the multicast server 110 broadcast the interactive data 136 on the multicast address 114. The multicast interactive data 136 is routed through the routers 134 on Internet 111 across the separate channel 132 to the set-top box 130. At step 222, the multicast server 110 repeats the broadcast of the interactive data a preselected number of times so that any number of set-top boxes can log onto the multicast address and obtain the data as it is carrouseled by the multicast server 110.

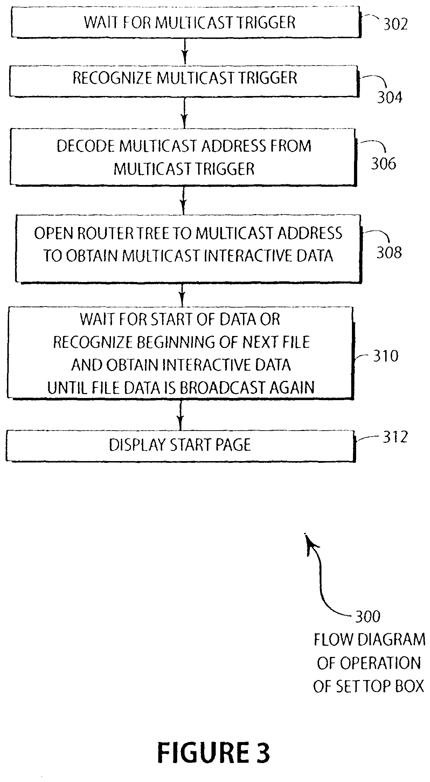

Fig. 3 is a flow diagram 300 that illustrates the operation of the set-top box 130. At step 302, the set-top box waits for the multicast trigger 129 that is encoded in the encoded video signal 118. At step 304, the set-top box recognizes the multicast trigger. At step 306, the set-top box decodes the multicast address from the multicast trigger 129. At step 308, the set-top box opens the Internet routers 134 to access the multicast address and obtain the multicast interactive data 136 from the multicast server 110. At step 310, the set-top box 130 waits for the start of the transmission of data or recognizes the beginning of the next file and obtains interactive data until the file data is broadcast again by the multicast server 110. At step 312, the set-top box displays the start page.

The present invention is therefore capable of providing multicast data across a separate channel 132 to a set-top box. The data can be carrouseled (repeated) so that various set-top boxes can access the data and obtain the full complement of interactive data at different times. This greatly reduces the bandwidth requirements of the server that is providing the data over the separate channel 132. In addition, this method of multicasting data is clearly more efficient than a Transport B type of multicasting and does not occupy the excess bandwidth of the cable, as does Transport B systems. Multicasting data as described herein provides the data in a fast and easy manner to numerous set-top boxes.

The foregoing description of the invention has been presented for purposes of illustration and description. It is not intended to be exhaustive or to limit the invention to the precise form disclosed, and other modifications and variations may be possible in light in the above teachings. The embodiment was chosen and described in order to best explain the principles of the invention and its practical application to thereby enable others skilled in the art to best utilize the invention in various embodiments and various modifications as are suited to the particular use contemplated. It is intended that the appended claims be construed to include other alternative embodiments of the invention except insofar as limited by the prior art.

## Claims

1. A method for multicasting interactive data to set-top boxes where a video signal (105) is encoded with a trigger signal (104) that contains an Internet address which can be accessed by set-top boxes (130) to obtain interactive data
**characterized in that**
said trigger signal (104) is decoded to obtain said Internet address from where said interactive data is accessed (218) and obtained;
said interactive data is multicasted (220) from a multicast server (110) at a multicast server address (114); and
said multicast server address (114) is encoded (214) in the video signal so that said interactive data can be accessed by a set-top box (130) at the multicast server address (114) through a separate channel (132).

2. The method of claim 1, where said interactive data is accessed (308, 310) by a set-top box (130) at said multicast server address (114) through a separate channel (132).

3. The method of one of the claims 1 or 2, wherein said trigger signal (104) is stripped from the video signal (105) to generate a stripped video signal (122), a trigger signal (126) is generated from said multicast server address (114) and said trigger signal (126) is encoded into the stripped video signal (122).

4. A system for multicasting interactive data to set-top boxes comprising:
a decoder (106) that receives an encoded video signal (105) from a source that is encoded with a trigger (104) and that decodes said trigger signal (104) to obtain an Internet address indicating where interactive data can be accessed;
a multicast server (110) that accesses and downloads said interactive data at said Internet address and multicasts said interactive data (136) from a multicast server address (114); and
an encoder (124) that encodes a video signal (118) with said multicast address so that at least one set-top box (130) can decode said video signal (118), to obtain said multicast address (114), access and download said interactive data over a separate channel (132) from said multicast server (110) at said multicast address (114).

5. The system of claim 4, where there is at least one set-top box (130) that decodes said video signal (118) to obtain said multicast address (114), and that accesses and downloads said interactive data over a separate channel (132) from the multicast server (110) at said multicast address (114).

6. The system of any one of claims 3 or 4, that further comprises:
a stipper (120) that strips said trigger signal (104) from said encoded video signal (105) to produce a stripped video signal (122);
a trigger server (112) that generates a trigger signal (126) from said multicast server address (114); and
an encoder (124) that encodes said trigger signal (126) into said stripped video signal (122).

7. The system of any one of claims 4 to 6 wherein said separate channel (132) comprises a back channel.

8. The system of any one of claims 4 to 6 wherein said separate channel (132) comprises an asymmetric channel.

## Patentansprüche

1. Verfahren für das Multicasting interaktiver Daten zu Set-Top-Boxen, bei dem ein Videosignal (105) mit einem Auslösesignal (104) kodiert wird, das eine Internetadresse enthält, auf die von Set-Top-Boxen (130) zugegriffen werden kann, um interaktive Daten zu erhalten,
**gekennzeichnet dadurch, dass**
besagtes Auslösesignal (104) dekodiert wird, um besagte Internetadresse zu erhalten, von der aus auf die besagten interaktiven Daten zugegriffen wird (218) und diese Daten erhalten werden;
besagte interaktive Daten gemulticasted werden (220), und zwar von einem Multicastserver (110) auf einer Multicastserveradresse (114); und
besagte Multicastserveradresse (114) in dem Videosignal kodiert (214) ist, so dass auf besagte interaktive Daten von einer Set-Top-Box (130) auf der Multicastserveradresse (114) über einen getrennten Kanal (132) zugegriffen werden kann.

2. Verfahren nach Anspruch 1, bei dem auf besagte interaktive Daten von einer Set-Top-Box (130) auf besagter Multicastserveradresse (114) über einen getrennten Kanal (132) zugegriffen wird (308, 310).

3. Verfahren nach einem der Ansprüche 1 oder 2, wobei besagtes Auslösesignal (104) von dem Videosignal (105) gestrippt wird, um ein gestripptes Videosignal (122) zu erzeugen, und ein Auslösesignal (126) von besagter Multicastserveradresse (114) erzeugt wird und besagtes Auslösesignal (126) in das gestrippte Videosignal (122) kodiert wird.

4. System für das Multicasting interaktiver Daten zu Set-Top-Boxen mit:
einem Decoder (106), der ein kodiertes Videosignal (105) von einer Quelle empfängt, die mit einem Auslöser (104) kodiert ist und das besagte Auslösesignal (104) dekodiert, um eine Internetadresse zu erhalten, die anzeigt, wo interaktive Daten zugänglich sein können;
einem Multicastserver (110), der auf besagte interaktive Daten bei besagter Internetadresse zugreift und besagte interaktive Daten (136) von einer Multicastserveradresse (114) multicastet; und
einem Kodierer (124), der ein Videosignal (118) mit besagter Multicastadresse kodiert, so dass mindestens eine Set-Top-Box (130) besagtes Videosignal (118) dekodieren kann, um besagte Multicastadresse (114) zu erhalten, Zugriff und herunterladen der besagten interaktiven Daten über einen getrennten Kanal (132) von besagtem Multicastserver (110) bei besagter Multicastadresse (114).

5. System nach Anspruch 4, wobei es mindestens eine Set-Top-Box (130) gibt, die besagtes Videosignal (118) dekodiert, um besagte Multicastadresse (114) zu erhalten, und das auf besagte interaktive Daten über einem getrennten Kanal (132) von dem Multicastserver (110) bei besagter Multicastadresse (114) zugreift und diese herunterlädt.

6. System nach einem der Ansprüche 3 oder 4, das folgendes umfasst:
einen Stripper (120), der besagtes Auslösesignal (104) von besagtem, kodierten Videosignal (105) gestrippt, um ein gestripptes Videosignal (122) zu erzeugen;
einen Auslöserserver (112), der ein Auslösesignal (126) von besagter Multicastserveradresse (114) erzeugt, und
einen Kodierer (124), der besagtes Auslösesignal (126), in besagtes, gestripptes separiertes Videosignal (122) kodiert.

7. System nach einem der Ansprüche 4 bis 6, wobei besagter getrennter Kanal (132) einen Rückkanal umfasst.

8. System nach einem der Ansprüche 4 bis 6, wobei besagter getrennter Kanal (132) einen asymmetrischen Kanal umfasst.

## Revendications

1. Méthode pour la multidiffusion de données interactives à des boîtiers décodeurs où un signal vidéo (105) est codé avec un signal de déclenchement (104) qui contient une adresse Internet qui est accessible par des boîtiers décodeurs (130) pour obtenir des données interactives
**caractérisée en ce que**
ledit signal de déclenchement (104) est décodé pour obtenir ladite adresse Internet d'où on accède (218) auxdites données interactives et on les obtient;
lesdites données interactives sont multidiffusées (220) depuis un serveur de multidiffusion (110) à une adresse de serveur de multidiffusion (114); et
ladite adresse de serveur de multidiffusion (114) est codée (214) dans le signal vidéo de telle sorte que lesdites données interactives sont accessibles par un boîtier décodeur (130) à l'adresse de serveur de multidiffusion (114) à travers un canal séparé (132).

2. Méthode selon la revendication 1, où un boîtier décodeur (130) accède (308, 310) auxdites données interactives à ladite adresse de serveur de multidiffusion (114) à travers un canal séparé (132).

3. Méthode selon l'une des revendications 1 ou 2, où ledit signal de déclenchement (104) est dépouillé du signal vidéo (105) pour générer un signal vidéo dépouillé (122), un signal de déclenchement (126) est généré à partir de ladite adresse de serveur de multidiffusion (114) et ledit signal de déclenchement (126) est codé dans le signal vidéo dépouillé (122).

4. Système pour la multidiffusion de données interactives à des boîtiers décodeurs comprenant:
un décodeur (106) qui reçoit un signal vidéo codé (105) à partir d'une source qui est codée avec un déclencheur (104) et qui décode ledit signal de déclenchement (104) pour obtenir une adresse Internet indiquant où des données interactives sont accessibles;
un serveur de multidiffusion (110) qui accède auxdites données interactives et les télécharge à ladite adresse Internet et multidiffuse lesdites données interactives (136) à partir d'une adresse de serveur de multidiffusion (114); et
un codeur (124) qui code un signal vidéo (118) avec ladite adresse de multidiffusion de sorte qu'au moins un boîtier décodeur (130) puisse décoder ledit signal vidéo (118), pour obtenir ladite adresse de multidiffusion (114), accéder auxdites données interactives et les télécharger sur un canal séparé (132) dudit serveur de multidiffusion (110) à ladite adresse de multidiffusion (114).

5. Système selon la revendication 4, où il y a au moins un boîtier décodeur (130) qui décode ledit signal vidéo (118) pour obtenir ladite adresse de multidiffusion (114), et qui accède auxdites données interactives et les télécharge sur un canal séparé (132) du serveur de multidiffusion (110) à ladite adresse de multidiffusion (114).

6. Système selon l'une quelconque des revendications 3 ou 4, qui comprend en outre:
un dépouilleur (120) qui dépouille ledit signal de déclenchement (104) dudit signal vidéo codé (105) pour produire un signal vidéo dépouillé (122);
un serveur de déclenchement (112) qui génère un signal de déclenchement (126) à partir de ladite adresse de serveur de multidiffusion (114); et
un codeur (124) qui code ledit signal de déclenchement (126) dans ledit signal vidéo dépouillé (122).

7. Système selon l'une quelconque des revendications 4 à 6 où ledit canal séparé (132) comprend un canal de retour.

8. Système selon l'une quelconque des revendications 4 à 6 où ledit canal séparé (132) comprend un canal asymétrique.
